# EUROPEAN PATENT SPECIFICATION

(11) **EP 3 277 969 B1**
(45) Date of publication and mention of the grant of the patent: **08.05.2019**
(21) Application number: 16726145.2
(22) Date of filing: 24.03.2016
(51) Int. Cl.: F16C 35/00, F16C 33/72

(54) **A SUPPORT ASSEMBLY FOR MOVABLE SHAFT IN PARTICULAR FOR MACHINERY FOR THE FOOD INDUSTRY**
STÜTZANORDNUNG FÜR BEWEGLICHE WELLE, INSBESONDERE FÜR MASCHINEN FÜR DIE LEBENSMITTELINDUSTRIE
ENSEMBLE DE SUPPORT POUR ARBRE MOBILE, EN PARTICULIER POUR MACHINES POUR L'INDUSTRIE ALIMENTAIRE

(30) Priority: 31.03.2015 IT UB20150378
(43) Date of publication of application: 07.02.2018
(73) Proprietor: Aktiebolaget SKF (publ), 415 50 Göteborg (SE)
(72) Inventor: BARACCA, Fausto, I-54100 Massa (IT); FALASCHI, Fabio, I-54033 Carrara (IT)
(74) Representative: Tedeschini, Luca
(86) International application number: PCT/IB2016/000369
(87) International publication number: WO 2016/156962

(56) References cited:
- JP-A- 2005 297 689
- US-A- 5 172 984
- US-A- 5 380 103

## Description

### Technical field of the invention

The present invention relates to a support assembly for furniture trees, for example rotating, in particular intended to be mounted on machines for the food industry.

### Known art

As it is known, the machines used in the food industry have many moving parts supported by sliding or rotating shafts, think for example conveyor belts, kneading machines, machines for washing of fresh food.

All these machines must be cleaned frequently, usually with water added with detergent and / or disinfectants, in order to monitor the possible occurrence of bacterial colonies which may pollute foods. In particular, it is necessary that these machines do not exhibit interstices or other parts where dirt, or even only the washing water, can penetrate and stagnate. The stagnation of liquids or moisture favors in fact a possible proliferation of bacteria.

This problem is particularly felt with respect to the complex support of mobile trees, which may be either type of terminal, where is housed a terminal end of the shaft, or feed through type. These support complexes, are formed by a housing element, generally annular, provided with a base or mounting flange to the machine, by a bearing, typically a rolling bearing (but could also be a sliding bearing), mounted to 'interior of the housing and which is coupled with the movable shaft, and a cover, normally cup-shaped, which is coupled in a forced manner on the element housing and that, in the case of through-trees, is equipped with a central through hole fitted with a seal for the shaft to pass through. Covers for bearing housing are known for example from US 5 172 984.

Currently we are using two different types of forced assembly: in a first type, the cover is planted, for example, snap, inside a seat formed frontally in the element housing. In the second type, instead, the cover is planted, for example, snap, externally to the element housing, for example to engage a seat formed on a radially outer lateral surface of the housing element.

In the first case it creates an annular gap all around the cover. In the second case, since the cover must also be removed to allow frequent inspection, it is necessary to provide at least one groove for the insertion of a tool (eg a screwdriver) by which to lever against the cover to remove. Moreover, it can remain even in this case, however, a gap between the lid and outer surface of the housing, due to the type of mechanical coupling used. The creation of these interstices between the housing and the cover element, the interstices in which water and dirt can stagnate, however, is entirely undesirable and does not allow to obtain valid certifications for the food industry.

Finally, the assembly of the kind described have the further drawback of being able to cause, as a result of repeated assembly and disassembly, damage to the cover and / or the creation of games, that loosen the coupling (so much so that in some cases the cover may accidentally come off) and / or that aggravate the formation of interstices where water, moisture and dirt can stagnate.

### Summary of the Invention

The object of the present invention is to provide a support assembly for furniture trees, in particular intended to be mounted on machines for the food industry, without any of the drawbacks of the known art and in particular in which it ensures at the same time the absence of interstices where they can nestle water, moisture and / or dirt, and a high ease of assembly and disassembly without the use of tools and the absence of risks of damage or loosening of the coupling cover / housing element as a result of frequent disassembly.

According to the invention, there is provided a support assembly for furniture trees having the characteristics set out in the appended claims.

### Brief Description of Drawings

The invention will now be described with reference to the accompanying drawings, which illustrate a non-limiting example of embodiment thereof, wherein:
- Figure 1 shows a front elevational view of a non-limiting embodiment of a support assembly for shafts according to the invention;
- Figure 2 shows the same view as Figure 1, but with an element (cover) removed;
- Figure 3 shows a front elevational view of the element (cover) removed in Figure 2;
- Figures 4 and 5 show sectional views according to a plane indicated by IV-IV and V-V, respectively, the element of figure 3;
- Figure 6 illustrates in enlarged scale a detail of Figure 5;
- Figures 7 and 8 illustrate the same perspective view of the front three-quarters of a housing element of the support assembly according to the invention realized according to two different embodiments, Figure 7 being relative to the embodiment of figure 1 and 2 and figure 8 being relative to a different possible embodiment which differs from that of figures 1 and 2 only for the element shown in the same figure 8;
- Figure 9 on an enlarged scale shows a front view in elevation and partially in section of a portion of a same detail of the housing elements illustrated in Figures 7 and 8; is
- Figure 10 illustrates a further enlarged scale a detail of Figure 9.

### Detailed Description

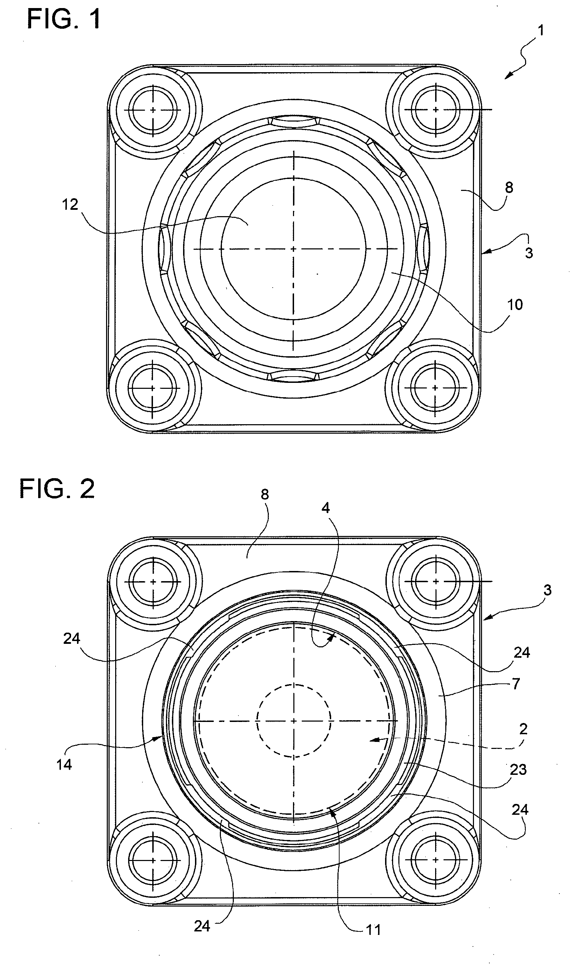

With reference to Figures 1 to 7, number 1 indicates as a whole a support assembly for movable shafts, rotating or sliding, not illustrated for simplicity.

The support assembly 1 comprises a bearing 2 (Figure 2), for example a rolling bearing, known and only shown schematically in broken lines for simplicity, adapted to receive in a movable shaft known manner, for example rotating, to support it, and a of the bearing housing 3 having a through seat 4 within which is received the bearing 2 in a stable and known manner, therefore not illustrated for simplicity.

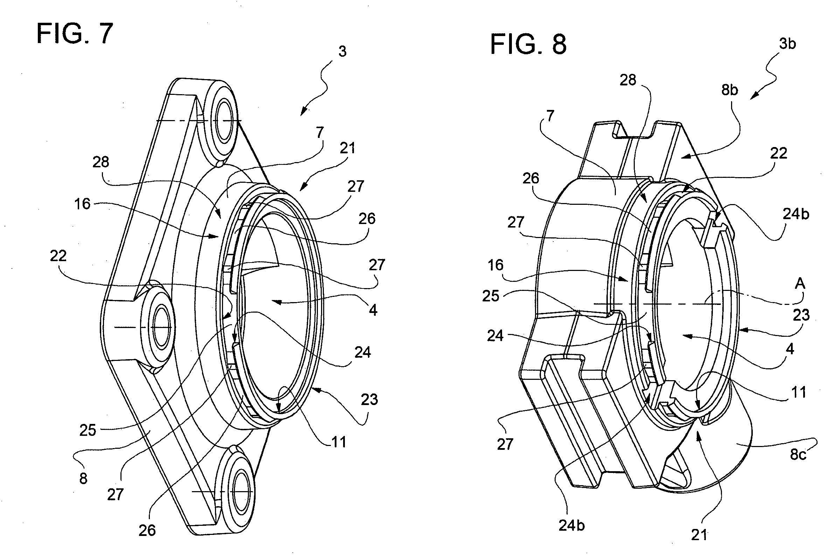

The support assembly 1 is in particular intended to be mounted on machines for the food industry. For this purpose, the bearing housing 3, which is illustrated in perspective view in Figure 7, is of the type intended to be rigidly mounted on a machine frame of a known type, not illustrated for simplicity, in particular for the food industry .

The bearing housing 3 comprises a housing element 7, in the annular complex, designed so as to be adapted to receive in a known manner, to its interior, in particular in the seat 4, the bearing 2, and a base or flange 8 of fastening to the machine frame quoted; the seat 4 in general presents an axis of symmetry that is also the axis of symmetry of the element housing 7.

Obviously, the form of realization of the bearing housing 3 illustrated in Figures 1, 2 and 7 is only one of the possible; for example, the base or flange 8, which is square in the illustrated example, can take on other symmetrical or asymmetrical shapes, or be formed and offset to the side relative to the housing 7, or again, with reference to Figure 8, where there is shown a housing of the bearing 3b variant 3 and where the similar or identical details to those of the bearing housing 3 of figure 7 are indicated for simplicity with the same reference numbers, the flange 8 of the bearing housing 3 is replaced by a base 8b that extends on both sides of the housing element 7 and 8c by a support, substantially cylindrical, which extends radially projecting from the element of the housing 7.

In any case, the support assembly 1 always also comprises a cover 10 to close fluid tight an opening 11 of the inner housing 4 of the housing element 7 of the bearing housing 3 or 3b, by which the seat 4 is mounted bearing 2.

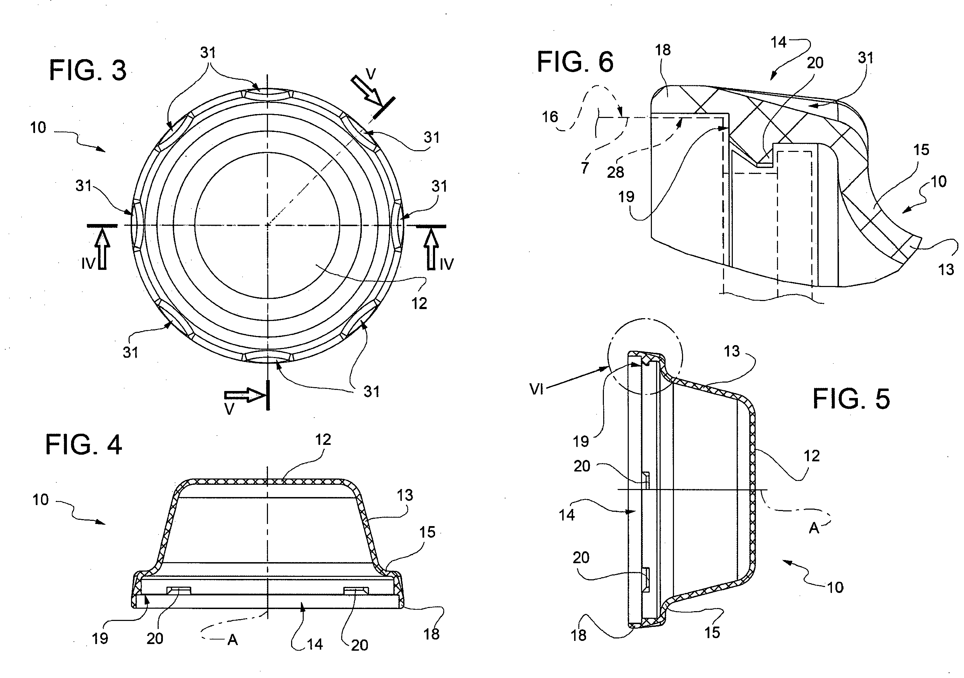

The lid 10 for the bearing housing 3 or 3b is generally cup-shaped and comprises (Figures 3-6) a bottom wall 12, an annular side wall 13 which extends transversely to the bottom wall 12 and a coupling portion 14 toward the bearing housing 3 or 3b.

The coupling portion 14 is annular, is formed integrally in one piece on one end 15 of the side wall 13 opposite to the bottom wall 12 and is designed to be coupled in use with the bearing housing 3 or 3b laterally outside the housing bearing 3,3b, in the present case it is shaped as a cup joint and is coupled laterally and radially on the outside on a lateral surface 16 radially outside of the annular housing 7, always present in any form of realization of the housing the bearing 3 (or 3b).

The side surface 16 and the coupling portion 14 are defined by a solid of revolution and have a common axis of symmetry coincident, in the illustrated examples, with an axis of symmetry A (Figures 4 and 5) of the lid 10 and which is also the ' of the housing 7 of the symmetry axis (figure 8) and the seat 4.

According to a first feature of the invention, the cover 10 is made of a single piece of synthetic plastic material selected appropriately and the coupling portion 14 is provided on the side opposite to the bottom wall 12 of an annular sealing lip 18, which is It extends frontally projecting from a front edge 19 (figures 4-6) of the coupling portion 14 and which is made of the same synthetic plastic material of the lid 10 so as to be elastically deformable in the radial direction from the inside towards the outside.

According to a further aspect of the invention, the coupling portion 14 of the cover 10 is provided radially on the inside of at least a pair of teeth 20 protruding radially towards the inside of the lid 10 and spaced circumferentially between them, which each extend for a limited circumferential portion of the coupling portion; in the example illustrated non-limiting teeth 20 are four, spaced by 90 °.

According to another aspect of the invention, and in combination with the presence of the teeth 20 on the lid 10, the radially outer lateral surface 16 of housing annular element 7 is provided with an annular seat 21 for receiving the teeth 20 of the cover 10.

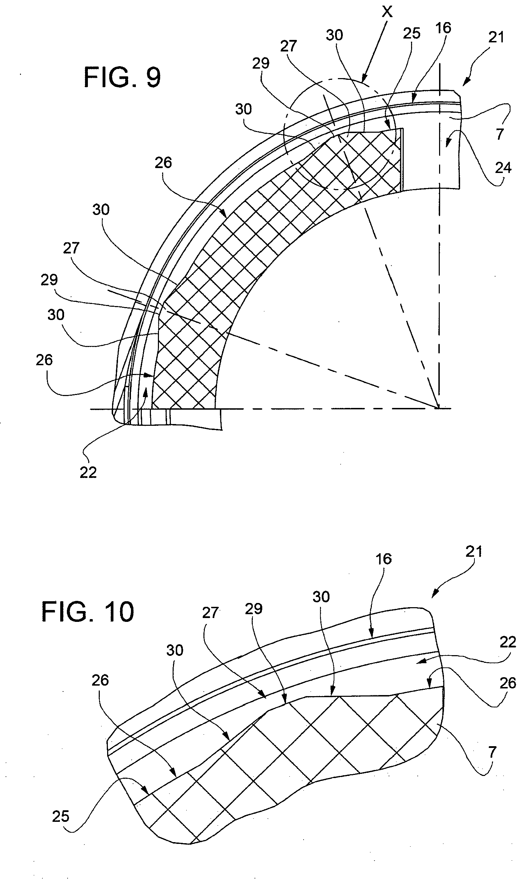

The annular seat 21 (Figures 7-10) consists, according to the invention, in an annular groove 22 arranged axially spaced with respect to a front edge 23 of the housing 7 delimiting the mouthpiece 11 and served by a number of axial grooves 24 equal to the number of the teeth 20 on the cover 10, which grooves 24 radially interrupt at least part of the front edge 23 of the housing element 7; and in a bottom wall 25 of the annular groove 22 which is provided with a circumferentially alternating plurality of hollows 26 and projections 27 arranged offset circumferentially with respect to the axial grooves 24. Further axial grooves 24b (Figures 8 and 9) may be present for the 'insertion of mounting tools.

The annular sealing lip 18 mates in fluidtight manner and with radial interference with a portion 28 of the radially outer lateral surface 16 of housing annular element 7, as only schematically shown out of scale and in broken lines in Figure 6. The portion 28 it is disposed on the side opposite to the front edge 23 with respect to the annular groove 22 and consists of a portion of a conical surface having taper facing towards the cover 10.

Here and hereinafter, the term "taper" of a conical or frusto-conical surface means the side toward which the vertex of the geometric cone facing bounding this surface. Then the housing 7 annular element tapers in correspondence with the conical surface portion 26 so as to progressively decrease its radial thickness toward the lid 10.

The section of the conical surface 26 defining the tract of the radially outer lateral surface 16 of housing annular element 7 which is coupled with interference with the annular lip 18 has, according to a further aspect of the invention, an inclination with respect to its axis of a symmetry equal to an acute angle and preferably less than 10 °. Furthermore, the cover 10 and the annular sealing lip 18 are made of a polymeric material, preferably but not necessarily polyurethane, by molding in a single piece.

The axial grooves 24 have a radial depth identical to the radial depth of the annular groove 22 at the axial grooves 24, so that respective bottom walls of the axial grooves and the bottom wall 25 of the radial groove 22 are arranged flush with each other.

The projections 27 of the bottom wall 25 of the annular groove 22 (Figures 9 and 10) each comprise a first portion 29 of circumferential raised flat surface with respect to the bottom wall 25 of the annular groove 22 and a pair of second portions of the circumferential flat surface 30 that flank the first segment 29 and forming two inclined planes that connect the first surface section 29 with the bottom wall 25 of the annular groove 22.

As already said, in the illustrated preferred embodiment, the cover 10 has two pairs of teeth 20 spaced circumferentially arranged in a symmetrical manner, staggered by 90 °; in this case, the radially outer lateral surface 16 of the housing element 7 has two pairs of axial grooves 24 arranged circumferentially spaced in a symmetrical manner, displaced by 90 °; and the bottom wall 25 of the annular groove 22 has a plurality of circumferential sectors having the same angular width and consisting of eight depressions 26, four of which are delimited axially by the edge 23 and the other four free as arranged in correspondence of the grooves 24, and eight projections 27; the depressions 26 are delimited by curved surfaces disposed substantially flush with the bottom wall 25 of the annular groove 22, while the projections 27 project radially with respect to the bottom wall 25 of the annular groove 22 and the depressions 26 are arranged alternating.

According to a further aspect of the invention, the cover 10 (Figures 3 and 6) is provided radially on the outside of a plurality of circumferential depressions 31 are arranged mutually circumferentially spaced in a regular manner, which are shaped so as to realize respective elements of gripping (for example designed to receive, each, a user's finger) adapted to allow a user to manually rotate the cover 10 with respect to the housing 7.

The circumferential depressions 31 are formed radially on the outside on the coupling portion 14 and are made so as to radially thin the coupling portion 14 in correspondence of the depressions 31 same; according to an aspect of the invention, the teeth 20 of the cover 10 are then formed radially on the inside of the coupling portion 14, each in a respective circumferential depression 31.

The depressions 31 in fact, weaken the cover 10 so as to make the coupling portion 14 is elastically deformable radially outwardly at least in correspondence of the teeth 20. In order to have an optimal combination of stiffness and flexibility of the cover 10, finally, the teeth 20 are formed substantially at the front edge 19 (figure 6).

Thanks to the geometry described, the coupling between lid 10 and housing element 7 presents no gap that can become a receptacle for moisture and / or dirt and is self-draining. In addition, the lip 18 also thanks to a suitable choice of the plastic material with which it is made in the cover 10, carries out an optimum hydraulic seal, preventing the entry of infiltration in the seat 4.

Finally, the innovative mechanical coupling between cover 10 and housing element 7 allows you to remove and replace the cover 10 indefinitely without damaging it, by simply turning the cover 10 either clockwise or anti-clockwise and then slide the teeth 20 along the grooves 24, by means of a typical bayonet coupling. On the contrary that in pairs bayonet of the traditional type, however, in the coupling according to the invention, thanks to the projections 27 and the depressions 26, the cover 10, once installed, is also blocked circumferentially and therefore prevent accidental disassembly.

In fact, the insertion, after bringing the teeth 20 within the groove 22 for sliding within the slots 24, it makes a rotation of the lid 10; rotation brings the teeth 20 to engage the oblique surface 30 of the projection 27 immediately adjacent to it in the direction of rotation; the tooth 20 is therefore pushed up, continuing the rotation, progressively towards the portion of flat surface 29, movement allowed by the elasticity of the lid 10 in correspondence of the teeth 20, the product obtained by means of thinning by the depressions 31 and thanks to a suitable choice of material polymer, preferably but not necessarily polyurethane, which is made by molding the cover 10. This movement also causes a certain resistance to rotation which can be detected by the user. Continuing the rotation in the same direction, the tooth 20 descends along the other portion of the inclined surface 30 opposite the previous one and "falls" into a depression 26, which is delimited between two adjacent projections 27. The tooth 20 is therefore locked in snap against rotation.

To remove the cover 10 must simply rotate the cover 10 still the same, in the same direction or in the opposite direction, to engage the tooth one of the two projections 27 adjacent to it, after which the 20 tooth is to be in another depression 26, which is, however, arranged in correspondence with a groove 24. it is therefore possible in this position to remove the lid from the element 10 of housing 7 simply making it translate axially.

All the objects of the invention are thus achieved.

## Claims

1. A bearing assembly (1) for movable, rolling or sliding shafts, comprising a bearing (2) adapted to receive the movable shaft, a bearing housing (3) comprising in turn an annular housing element (7) and a fixing base or flange (8), and a cover (10) for fluid-tightly closing an inlet opening (11) of an inner seat (4) of the housing element (7) within which the bearing is mounted; the cover (10) comprising a bottom wall (12), an annular lateral wall (13) which extends transversely to the bottom wall and an annular coupling portion (14) towards a radially outer lateral surface (16) of the annular housing element (7), the coupling portion being integrally obtained on one end (15) of the lateral wall of the cover, opposite to the bottom wall; **characterized in that**, in combination:
- the cover (10) is made in one piece of a synthetic plastic material and has the coupling portion (14) thereof radially provided on the inside with at least one pair of teeth (20), radially projecting towards the inside of the cover and circumferentially spaced apart from each other, which extend each over a limited circumferential stretch of the coupling portion;
- the radially outer lateral surface (16) of the annular housing element (7) is provided with an annular seat (21) for receiving the teeth (20) of the cover, the annular seat consisting of: an annular groove (22) arranged so as to be axially spaced apart with respect to a frontal rim (23) of the housing element delimiting the inlet opening (11); a number of axial grooves (24) equal to the number of teeth (20) present on the cover and which radially interrupt at least part of the frontal rim (23) of the housing element; and a bottom wall (25) of the annular groove which is circumferentially provided with an alternating plurality of depressions (26) and projecting parts (27), the projection parts being arranged so as to be circumferentially staggered with respect to the axial grooves (24).

2. A bearing assembly (1) according to claim 1, **characterized in that** the coupling portion (14) is provided on the side opposite to the bottom wall (12) of the cover with an annular sealing lip (18) which frontally extends so as to protrude from the frontal rim (19) of the coupling portion (14) and which is made of the same synthetic plastic material as the cover (10) so as to be elastically deformable in radial direction from the inside outwards;
- the annular sealing lip (18) being coupled in a fluid-tight manner and with radial interference to a stretch (28) of the radially outer lateral surface (16) of the annular housing element (7) arranged on the opposite side of the frontal rim (23) with respect to the annular groove (22) and consisting of a conical surface stretch having its taper facing the cover (10).

3. A bearing assembly according to claim 2, **characterized in that** the conical surface stretch (28) defining the stretch of the radially outer lateral surface (16) of the annular housing element which is coupled with interference to the annular lip (18) has an inclination with respect to a symmetry axis thereof forming an acute angle and preferably less than 10°.

4. A bearing assembly according to one of the claims 2 or 3, **characterized in that** the cover (10) and the annular sealing lip (18) are made of polyurethane, by single-piece molding.

5. A bearing assembly according to one of the preceding claims, **characterized in that** the axial grooves (24) have a radial depth identical to that of the annular groove (22) obtained on the radially outer lateral surface (16) of the housing element at the axial grooves themselves, so that respective bottom walls of the axial grooves and of the annular groove (22) are arranged flush with one another.

6. A bearing assembly according to one of the preceding claims, **characterized in that** the projecting parts (27) of the bottom wall (25) of the annular groove (22) comprise each a first circumferential stretch (29) of flat surface raised above the bottom wall (25) of the annular groove and a pair of second circumferential stretches (30) of flat surface which flank the first stretch (29) and form two inclined planes which connect the first surface stretch (29) to the bottom wall (25) of the annular groove.

7. A bearing assembly according to one of the preceding claims, **characterized in that** the cover (10) has two pairs of teeth (20) arranged so as to be symmetrically circumferentially spaced apart, staggered by 90°; the radially outer lateral surface of the housing element having two pairs of axial grooves (24) arranged so as to be symmetrically circumferentially spaced apart, staggered by 90°; and the bottom wall (25) of the annular groove (22) having eight circumferential sectors having the same angular width, consisting of four depressions (26) delimited by four curved surfaces arranged substantially flush with the bottom wall (25) of the annular groove and of four projecting parts (27) which radially protrude with respect to the bottom wall (25) of the annular groove, arranged alternating with the depressions.

8. A bearing assembly according to one of the preceding claims, **characterized in that** the cover (10) is radially provided on the outside with a plurality of circumferential shallow recesses (31) arranged so as to be circumferentially evenly spaced apart from one another, which are shaped so as to form respective gripping elements adapted to allow a user to manually rotate the cover with respect to the housing element (7).

9. A bearing assembly according to claim 8, **characterized in that** the circumferential shallow recesses (31) are obtained radially on the outside on the coupling portion (14) and are made so as to make radially thinner the coupling portion at the shallow recesses themselves; the teeth (20) of the cover being radially obtained on the inside of the coupling portion (14), at respective circumferential shallow recesses (31), the latter weakening the cover so as to make the coupling portion (14) elastically deformable radially outwards at least at the teeth (20).

## Patentansprüche

1. Lageranordnung (1) für bewegliche, rollende oder gleitende Wellen, umfassend ein Lager (2), das geeignet ist, die bewegliche Welle aufzunehmen, ein Lagergehäuse (3), das seinerseits ein ringförmiges Gehäuseelement (7) und einen Befestigungssockel oder -flansch (8) umfasst, und eine Abdeckung (10) zum fluiddichten Verschließen einer Einlassöffnung (11) einer inneren Fassung (4) des Gehäuseelements (7), innerhalb derer das Lager montiert ist, wobei die Abdeckung (10) eine Bodenwand (12), eine ringförmige Seitenwand (13), die sich quer zur Bodenwand erstreckt, und einen ringförmigen Kopplungsabschnitt (14) zu einer radial außenliegenden Seitenfläche (16) des ringförmigen Gehäuseelements (7) hin umfasst, wobei der Kopplungsabschnitt integral an einem Ende (15) der Seitenwand der Abdeckung erhalten ist, **dadurch gekennzeichnet, dass** in Kombination:
- die Abdeckung (10) einstückig aus einem synthetischen Kunststoff gefertigt ist und deren Kopplungsabschnitt (14) auf der Innenseite radial mit mindestens einem Paar radial zum Inneren der Abdeckung hin vorstehender und in Umfangsrichtung zueinander beabstandeter Zähne (20) versehen ist, die sich jeweils über ein begrenztes Umfangsstück des Kopplungsabschnitts erstrecken,
- die radial außenliegende Seitenfläche (16) des ringförmigen Gehäuseelements (7) mit einer ringförmigen Fassung (21) zum Aufnehmen der Zähne (20) der Abdeckung versehen ist, wobei die ringförmige Fassung aus Folgendem besteht: einer Ringnut (22), die so angeordnet ist, dass sie bezüglich eines die Einlassöffnung (11) begrenzenden stirnseitigen Rands (23) des Gehäuseelements axial beabstandet ist, eine der Anzahl an der Abdeckung vorhandener Zähne (20) entsprechende Anzahl an axialen Nuten (24), die zumindest einen Teil des stirnseitigen Rands (23) des Gehäuseelements radial unterbrechen, und eine Bodenwand (25) der Ringnut, die in Umfangsrichtung mit einer abwechselnden Vielzahl von Vertiefungen (26) und vorstehenden Teilen (27) versehen ist, wobei die vorstehenden Teile so angeordnet sind, dass sie bezüglich der axialen Nuten (24) in Umfangsrichtung versetzt sind.

2. Lageranordnung (1) nach Anspruch 1, **dadurch gekennzeichnet, dass** der Kopplungsabschnitt (14) auf der der Bodenwand (12) entgegengesetzten Seite der Abdeckung mit einer ringförmigen Dichtlippe (18) versehen ist, die sich stirnseitig so erstreckt, dass sie vom stirnseitigen Rand (19) des Kopplungsabschnitts vorspringt, und die aus dem gleichen synthetischen Kunststoff gefertigt ist wie die Abdeckung (10), so dass sie in Radialrichtung von innen nach außen elastisch verformbar ist,
- wobei die ringförmige Dichtlippe (18) fluiddicht und mit radialer Presspassung an ein Stück (28) der radial außenliegenden Seitenfläche (16) des ringförmigen Gehäuseelements (7) gekoppelt ist, der bezüglich der Ringnut (22) auf einer entgegengesetzten Seite des stirnseitigen Rands (23) angeordnet ist und aus einem konischen Flächenstück besteht, dessen Verjüngung der Abdeckung (10) zugewandt ist.

3. Lageranordnung nach Anspruch 2, **dadurch gekennzeichnet, dass** das konische Flächenstück (28), welches das Stück der radial außenliegenden Seitenfläche (16) des ringförmigen Gehäuseelements definiert, das mit Presspassung an die ringförmige Lippe (18) gekoppelt ist, bezüglich einer Symmetrieachse davon eine Neigung aufweist, die einen spitzen Winkel von bevorzugt weniger als 10° bildet.

4. Lageranordnung nach einem der Ansprüche 2 oder 3, **dadurch gekennzeichnet, dass** die Abdeckung (10) und die ringförmige Dichtlippe (18) aus Polyurethan einstückig gefertigt sind.

5. Lageranordnung nach einem der vorhergehenden Ansprüche, **dadurch gekennzeichnet, dass** die axialen Nuten (24) eine radiale Tiefe aufweisen, die mit derjenigen der an der radial außenliegenden Seitenfläche (16) des Gehäuseelements an den axialen Nuten selbst erhaltenen Ringnut (22) identisch sind, so dass jeweilige Bodenwände der axialen Nuten und der Ringnut (22) bündig miteinander angeordnet sind.

6. Lageranordnung nach einem der vorhergehenden Ansprüche, **dadurch gekennzeichnet, dass** die vorstehenden Teile (27) der Bodenwand (25) der Ringnut (22) jeweils ein erstes Umfangsstück (29) einer über die Bodenwand (25) der Ringnut erhobenen ebenen Fläche und ein Paar zweiter Umfangsstücke (30) einer ebenen Fläche umfasst, die das erste Stück (29) flankieren und zwei geneigte Ebenen bilden, die das erste Flächenstück (29) mit der Bodenwand (25) der Ringnut verbinden.

7. Lageranordnung nach einem der vorhergehenden Ansprüche, **dadurch gekennzeichnet, dass** die Abdeckung (10) zwei Paare von Zähnen (20) aufweist, die so angeordnet sind, dass sie in Umfangsrichtung um 90° versetzt symmetrisch beabstandet sind, die radial außenliegende Seitenfläche des Gehäuseelements zwei Paare von axialen Nuten (24) aufweist, die so angeordnet sind, dass sie in Umfangsrichtung um 90° versetzt symmetrisch beabstandet sind, und die Bodenwand (25) der Ringnut (22) acht in Umfangsrichtung verlaufende Sektoren mit gleicher Winkelöffnung aufweist, die aus vier Vertiefungen (26), die durch vier im Wesentlichen bündig mit der Bodenwand (25) der Ringnut angeordnete gekrümmte Flächen begrenzt sind, und aus vier vorstehenden Teilen (27) bestehen, die bezüglich der Bodenwand (25) der Ringnut radial vorspringen und abwechselnd mit den Vertiefungen angeordnet sind.

8. Lageranordnung nach einem der vorhergehenden Ansprüche, **dadurch gekennzeichnet, dass** die Abdeckung (10) radial auf der Außenseite mit einer Vielzahl in Umfangsrichtung verlaufender flacher Ausnehmungen (31) versehen ist, die so angeordnet sind, dass sie in Umfangsrichtung gleichmäßig zueinander beabstandet sind, und die so ausgebildet sind, dass sie jeweilige Greifelemente bilden, die geeignet sind, einem Benutzer ein manuelles Drehen der Abdeckung bezüglich des Gehäuseelements (7) zu ermöglichen.

9. Lageranordnung nach Anspruch 8, **dadurch gekennzeichnet, dass** die in Umfangsrichtung verlaufenden flachen Ausnehmungen (31) radial auf der Außenseite des Kopplungsabschnitts (14) erhalten sind und so gefertigt sind, dass sie den Kopplungsabschnitt an den flachen Ausnehmungen selbst radial dünner machen, wobei die Zähne (20) der Abdeckung radial auf der Innenseite des Kopplungsabschnitts (14) an jeweiligen in Umfangsrichtung verlaufenden flachen Ausnehmungen (31) erhalten sind, wobei Letztere die Abdeckung so verschmälern, dass sie den Kopplungsabschnitt zumindest an den Zähnen (20) radial nach außen elastisch verformbar machen.

## Revendications

1. Ensemble palier (1) pour arbres mobiles, rotatifs ou coulissants, comprenant un palier (2) conçu pour recevoir l'arbre mobile, un logement de palier (3) comprenant à son tour un élément de logement annulaire (7) et une base ou bride (8) pour la fixation, et un couvercle (10) pour fermer de façon étanche aux fluides une ouverture d'entrée (11) d'un siège interne (4) de l'élément de logement (7) dans lequel le palier est monté ; le couvercle (10) comprenant une paroi inférieure (12), une paroi latérale annulaire (13) qui s'étend transversalement à la paroi inférieure et une partie d'accouplement annulaire (14) vers une surface latérale radialement extérieure (16) de l'élément de logement annulaire (7), la partie d'accouplement étant obtenue en un seul bloc sur une extrémité (15) de la paroi latérale du couvercle, à l'opposé de la paroi inférieure ; **caractérisé en ce que**, en combinaison :
- le couvercle (10) est réalisé de façon monobloc dans un matériau plastique synthétique et sa partie d'accouplement (14) est prévue radialement sur l'intérieur avec au moins une paire de dents (20) faisant saillie radialement vers l'intérieur du couvercle et espacées de manière circonférentielle l'une de l'autre, qui s'étendent chacune sur une section circonférentielle limitée de la partie d'accouplement ;
- la surface latérale radialement extérieure (16) de l'élément de logement annulaire (7) est pourvue d'un siège annulaire (21) destiné à recevoir les dents (20) du couvercle, le siège annulaire comprenant : une rainure annulaire (22) disposée de façon à être axialement espacée par rapport à un bord avant (23) de l'élément de logement délimitant l'ouverture d'entrée (11) ; des rainures axiales (24) dont le nombre est égal au nombre de dents (20) présentes sur le couvercle et qui interrompent radialement au moins une partie du bord avant (23) de l'élément de logement ; et une paroi inférieure (25) de la rainure annulaire dont la circonférence est pourvue d'une pluralité de creux (26) et de parties en saillie (27) alternés, les parties en saillie étant disposées de manière à être décalées sur la circonférence par rapport aux rainures axiales (24).

2. Ensemble palier (1) selon la revendication 1, **caractérisé en ce que** la partie d'accouplement (14) est pourvue, du côté opposé à la paroi inférieure (12) du couvercle, d'une lèvre d'étanchéité annulaire (18) qui s'étend vers l'avant de manière à faire saillie à partir du bord avant (19) de la partie d'accouplement (14) et qui est réalisée dans le même matériau plastique synthétique que le couvercle (10), de manière à être élastiquement déformable dans la direction radiale de l'intérieur vers l'extérieur ;
- la lèvre d'étanchéité annulaire (18) étant couplée de manière étanche aux fluides et avec interférence radiale à une section (28) de la surface latérale radialement extérieure (16) de l'élément de logement annulaire (7) disposé sur le côté opposé du bord avant (23) par rapport à la rainure annulaire (22) et consistant en une section de surface conique présentant une conicité tournée vers le couvercle (10).

3. Ensemble palier selon la revendication 2, **caractérisé en ce que** la section de surface conique (28) définissant la section de la surface latérale radialement extérieure (16) de l'élément de logement annulaire qui est couplée avec interférence à la lèvre annulaire (18) présente une inclinaison par rapport à son axe de symétrie formant un angle aigu, de préférence inférieur à 10°.

4. Ensemble palier selon la revendication 2 ou 3, **caractérisé en ce que** le couvercle (10) et la lèvre d'étanchéité annulaire (18) sont réalisés en polyuréthane, par moulage en une seule pièce.

5. Ensemble palier selon l'une des revendications précédentes, **caractérisé en ce que** les rainures axiales (24) présentent une profondeur radiale identique à celle de la rainure annulaire (22) obtenue sur la surface latérale radialement extérieure (16) de l'élément de logement au niveau des rainures axiales elles-mêmes, de sorte que des parois inférieures respectives des rainures axiales et de la rainure annulaire (22) sont disposées en affleurement l'une par rapport à l'autre.

6. Ensemble palier selon l'une des revendications précédentes, **caractérisé en ce que** les parties en saillie (27) de la paroi inférieure (25) de la rainure annulaire (22) comprennent chacune une première section circonférentielle (29) de surface plane surélevée au-dessus de la paroi inférieure (25) de la rainure annulaire et de secondes sections circonférentielles (30) de surface plane qui longent la première section (29) et forment deux plans inclinés reliant la première section circonférentielle (29) à la paroi inférieure (25) de la rainure annulaire.

7. Ensemble palier selon l'une des revendications précédentes, **caractérisé en ce que** le couvercle (10) comporte deux paires de dents (20) disposées de façon à être espacées de manière symétrique et circonférentielle, décalées de 90° ; la surface latérale radialement extérieure de l'élément de logement comportant deux paires de rainures axiales (24) disposées de façon à être espacées de manière symétrique et circonférentielle, décalées de 90° ; et la paroi inférieure (25) de la rainure annulaire (22) comportant huit secteurs circonférentiels ayant la même largeur angulaire, consistant en quatre creux (26) délimités par quatre surfaces incurvées disposées sensiblement en affleurement avec la paroi inférieure (25) de la rainure annulaire et de quatre parties en saillie (27) qui font saillie radialement par rapport à la paroi inférieure (25) de la rainure annulaire, disposées en alternance avec les creux.

8. Ensemble palier selon l'une des revendications précédentes, **caractérisé en ce que** le couvercle (10) est pourvu radialement à l'extérieur d'une pluralité d'évidements circonférentiels peu profonds (31) disposés de manière à être espacés uniformément les uns des autres sur la circonférence, qui sont conçus de manière à former des éléments de préhension respectifs adaptés pour permettre à un utilisateur de tourner manuellement le couvercle par rapport à l'élément de logement (7).

9. Ensemble palier selon la revendication 8, **caractérisé en ce que** les évidements circonférentiels peu profonds (31) sont obtenus radialement à l'extérieur sur la partie d'accouplement (14) et sont réalisés de manière à rendre plus mince dans le sens radial la partie d'accouplement au niveau des évidements peu profonds eux-mêmes ; les dents (20) du couvercle étant obtenues radialement à l'intérieur de la partie d'accouplement (14), dans des évidements circonférentiels peu profonds respectifs (31), ces derniers affaiblissant le couvercle afin de rendre la partie d'accouplement(14) élastiquement déformable radialement à l'extérieur au moins au niveau des dents (20).
